(19) Europäisches Patentamt
European Patent Office
Office européen des brevets

(11) EP 4 142 007 A1

(12) EUROPEAN PATENT APPLICATION

(43) Date of publication:
01.03.2023 Bulletin 2023/09

(21) Application number: 22191033.4

(22) Date of filing: 18.08.2022

(51) International Patent Classification (IPC):
H01M 10/0567 (2010.01) H01M 10/0525 (2010.01)
H01M 4/36 (2006.01) H01M 4/38 (2006.01)
H01M 4/587 (2010.01) H01M 4/62 (2006.01)
H01M 4/525 (2010.01)

(52) Cooperative Patent Classification (CPC):
H01M 10/0567; H01M 4/364; H01M 4/366; H01M 4/386; H01M 4/587; H01M 4/625; H01M 10/0525; H01M 4/525; H01M 2300/0025

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 26.08.2021 KR 20210113344
19.05.2022 KR 20220061566

(71) Applicant: Samsung SDI Co., Ltd.
Yongin-si, Gyeonggi-do 17084 (KR)

(72) Inventors:
- Oh, Seungryong
17084 Yongin-si, Gyeonggi-do (KR)
- Kim, Myunghoon
17084 Yongin-si, Gyeonggi-do (KR)
- Kim, Sanghoon
17084 Yongin-si, Gyeonggi-do (KR)
- Kim, Yunhee
17084 Yongin-si, Gyeonggi-do (KR)
- Park, Injun
17084 Yongin-si, Gyeonggi-do (KR)
- Park, Hongryeol
17084 Yongin-si, Gyeonggi-do (KR)
- Shin, Jeongmin
17084 Yongin-si, Gyeonggi-do (KR)
- Jeong, Myunghwan
17084 Yongin-si, Gyeonggi-do (KR)
- Choi, Hyunbong
17084 Yongin-si, Gyeonggi-do (KR)

(74) Representative: Gulde & Partner
Patent- und Rechtsanwaltskanzlei mbB
Wallstraße 58/59
10179 Berlin (DE)

# (54) RECHARGEABLE LITHIUM BATTERY

(57) Provided is a rechargeable lithium battery including a positive electrode including a positive active material; a negative electrode including a negative active material; and an electrolyte solution including a non-aqueous organic solvent, a lithium salt, and an additive, wherein the negative active material includes a Si composite and the additive includes a compound represented by Chemical Formula 1.

Details of Chemical Formula 1 are as described in the specification.

EP 4 142 007 A1

## Description

## BACKGROUND OF THE INVENTION

### (a) Field of the Invention

This disclosure relates to a rechargeable lithium battery.

### (b) Description of the Related Art

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

In particular, as IT devices increasingly achieve high performance, a high-capacity battery is required, and the high capacity may be realized through expansion of a voltage range, increasing energy density but bringing about a problem of deteriorating performance of a positive electrode due to oxidization of an electrolyte solution in the high voltage range.

For example, $LiPF_6$, which is most often used as a lithium salt of the electrolyte solution, reacts with an electrolyte solvent to promote depletion of the solvent and generate a large amount of gas. $LiPF_6$ is decomposed and produces a decomposition product such as HF, $PF_5$, and the like, which causes the electrolyte depletion and leads to performance deterioration and insufficient safety at a high temperature.

The decomposition products of the electrolyte solution are deposited into a film on the surface of an electrode to increase internal resistance of the battery and eventually cause problems of deteriorating battery performance and shortening a cycle-life. In particular, this side reaction is further accelerated at a high temperature where a reaction rate becomes faster, and gas components generated due to the side reaction may rapidly increase an internal pressure of the battery and thus have a fatal adverse effect on stability of the battery.

An oxidization of the electrolyte solution in the high voltage range is very accelerated and thus known to greatly increase resistance of the electrode during the long-term charge and discharge process.

Accordingly, an electrolyte solution applicable under conditions of a high voltage and a high-temperature condition is being required.

## SUMMARY OF THE INVENTION

In an embodiment, when a negative active material including a Si composite is used for high capacity, an increase in internal resistance of a battery due to a side reaction between Si particles and an electrolyte solution may be suppressed by introduction of an additive to provide a rechargeable lithium battery having improved battery stability and at the same time improved cycle-life characteristics according to an increase in capacity.

The present invention provides a rechargeable lithium battery as defined in claim 1 and including a positive electrode including a positive active material; a negative electrode including a negative active material; and an electrolyte solution including a non-aqueous organic solvent, a lithium salt, and an additive,

wherein the negative active material includes a Si composite, and
the additive includes a compound represented by Chemical Formula 1.

[Chemical Formula 1]

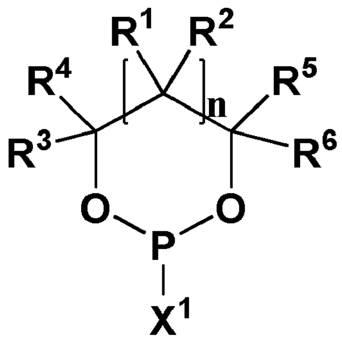

In Chemical Formula 1,

$X^1$ is a fluoro group, a chloro group, a bromo group, or an iodo group,
$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1.

An increase in the internal resistance of the battery may be suppressed and a rechargeable lithium battery with improved cycle-life characteristics may be realized.

## BRIEF DESCRIPTION OF THE DRAWINGS

FIG. 1 is a schematic view illustrating a rechargeable lithium battery according to an embodiment of the present invention.

## DETAILED DESCRIPTION OF THE EMBODIMENTS

Hereinafter, a rechargeable lithium battery according to an embodiment of the present invention will be described in detail with reference to the accompanying drawings. However, these embodiments are exemplary, the present invention is not limited thereto and the present invention is defined by the scope of claims.

Hereinafter, when a definition is not otherwise provided, "substituted" refers to replacement of hydrogen of a compound by a substituent selected from a halogen atom (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof.

A rechargeable lithium battery may be classified into a lithium ion battery, a lithium ion polymer battery, and a lithium polymer battery depending on types of a separator and an electrolyte and also may be classified to be cylindrical, prismatic, coin-type, pouch-type, and the like depending on shapes. In addition, it may be bulk type and thin film type depending on sizes. Structures and manufacturing methods for lithium ion batteries pertaining to this disclosure are well known in the art.

Herein, a cylindrical rechargeable lithium battery will be exemplarily described as an example of the rechargeable lithium battery. FIG. 1 schematically shows the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte solution (not shown) impregnating the positive electrode 114, the negative electrode 112, and the separator 113, a battery case 120 housing the battery cell, and a sealing member 140 sealing the battery case 120.

Hereinafter, a more detailed configuration of the rechargeable lithium battery 100 according to an embodiment of the present invention will be described.

A rechargeable lithium battery according to an embodiment of the present invention includes a positive electrode, a negative electrode, and an electrolyte solution.

The electrolyte solution includes a non-aqueous organic solvent, a lithium salt, and an additive, and the additive includes a compound represented by Chemical Formula 1.

[Chemical Formula 1]

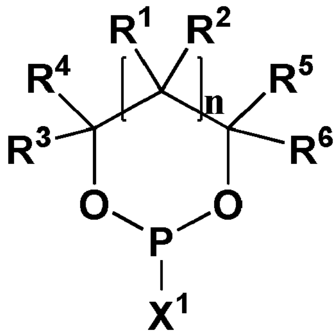

In Chemical Formula 1,

$X^1$ is a fluoro group, a chloro group, a bromo group, or an iodo group,
$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1.

According to an embodiment, in Chemical Formula 1 $X^1$ is F.
The compound represented by Chemical Formula 1 has high high-temperature stability on the surface of the negative electrode, forms a solid electrolyte interface (SEI) with excellent ion conductivity, and suppresses a side reaction of $LiPF_6$ by a $-PO_2X^1$ (especially $-PO_2F$) functional group to reduce the gas generation caused by a decomposition reaction of the electrolyte solution during high-temperature storage.
In particular, as described later, when a Si composite including Si particles is used as a negative active material for high capacity, an internal resistance of the battery increases due to a side reaction between the Si particles and the electrolyte solution, and as the content of Si particles increases, an increase degree of the internal resistance is even higher.
However, when the compound represented by Chemical Formula 1 is introduced as an additive, a side reaction with an electrolyte solution may be suppressed and thus a rechargeable lithium battery with improved battery stability and improved cycle-life characteristics according to capacity increase may be provided. That is, it is possible to further improve trade-off characteristics of an increase in capacity and an increase in resistance, which may occur according to the use of Si particles.
Specifically, the compound represented by Chemical Formula 1 may be coordinated with a pyrolyzed product of a lithium salt such as $LiPF_6$ or anions dissociated from the lithium salt and thus form a complex, and the complex formation may stabilize the pyrolyzed product of a lithium salt such as $LiPF_6$ or the anions dissociated from the lithium salt. Therefore, it may suppress an undesired side reaction of the anions with the electrolyte and prevent gas generation inside a rechargeable lithium battery and thus greatly reduce a defect rate as well as improve cycle-life characteristics of the rechargeable lithium battery.
In particular, the 5-membered or 6-membered phosphorus heterocycles contributes to the stabilization of anions dissociated from the pyrolyzed product of the lithium salt or the lithium salt due to the formation of the complex, whereas the linear phosphite derivative induces a side reaction of $LiPF_6$ due to the dissociated $-PO_2X^1$ (especially $-PO_2F$) functional group and causes gas generation due to the decomposition reaction of the electrolyte when stored at high temperature. Therefore, when the compound represented by Chemical Formula 1 includes the 5-membered or 6-membered phosphorus heterocycles is included compared to the linear phosphite derivative, cycle-life characteristics of the rechargeable lithium battery may be more remarkably improved.
Chemical Formula 1 may be represented by Chemical Formula 1A or Chemical Formula 1B.

[Chemical Formula 1A] [Chemical Formula 1B]

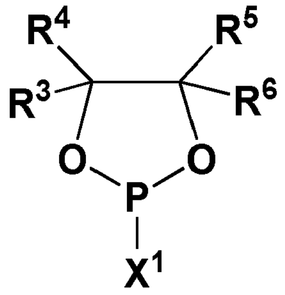

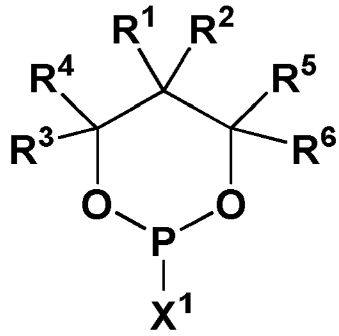

In Chemical Formula 1A and Chemical Formula 1B,

$X^1$ is a fluoro group, a chloro group, a bromo group, or an iodo group, and
$R^1$ to $R^6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

In Chemical Formula 1A and Chemical Formula 1B, $R^3$ and $R^4$ may each be hydrogen, and at least one of $R^1$, $R^2$, $R^5$, and $R^6$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

For example, Chemical Formula 1 may be represented by Chemical Formula 1A.

In a specific example, in Chemical Formula 1A, $R^3$ and $R^4$ may each be hydrogen and at least one of $R^5$ and $R^6$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

For example, in Chemical Formula 1A, $R^3$ and $R^4$ may each be hydrogen and at least one of $R^5$ and $R^6$ may be a substituted or unsubstituted C1 to C10 alkyl group.

According to an embodiment, in Chemical Formula 1A or Chemical Formula 1B $X^1$ is F.

The compound represented by Chemical Formula 1 may be included in an amount of 0.1 parts by weight to 10 parts by weight, for example 0.1 parts by weight to 5.0 parts by weight, or 0.1 parts by weight to 3.0 parts by weight based on 100 parts by weight of the non-aqueous organic solvent and the lithium salt of the electrolyte solution (i.e. the combined weight of the non-aqueous organic solvent and the lithium salt without any other additive).

When the amount of the compound represented by Chemical Formula 1 is within the above range, a rechargeable lithium battery having improved high-temperature storage characteristics and cycle-life characteristics can be implemented.

For example, the compound represented by Chemical Formula 1 may be selected from the compounds of Group 1, i.e. 2-fluoro-1,3,2-dioxaphospholane and 2-fluoro-4-methyl-1,3,2-dioxaphospholane.

[Group 1]

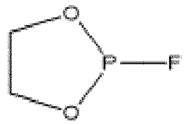

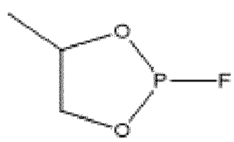

Meanwhile, the electrolyte may further include other additives in addition to the aforementioned additive.

The other additives may include at least one of vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), polysulfone, 1,3,6-hexane tricyanide (HTCN), propene sultone (PST), propane sultone (PS), lithium tetrafluoroborate ($LiBF_4$), lithium difluorophosphate ($LiPO_2F_2$), and 2-fluorobiphenyl (2-FBP).

By further including the aforementioned other additives, cycle-life may be further improved or gases generated from the positive electrode and the negative electrode may be effectively controlled during high-temperature storage.

The other additives may be included in an amount of about 0.2 parts by weight to about 20 parts by weight, specifically about 0.2 parts by weight to about 15 parts by weight, or for example about 0.2 parts by weight to about 10 parts by weight based on the total weight of the electrolyte solution for a rechargeable lithium battery.

When the content of other additives is as described above, the increase in film resistance may be minimized, thereby contributing to the improvement of battery performance.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and butylene carbonate (BC). The ester-based solvent may include methyl acetate, ethyl acetate, n-propyl acetate, t-butyl acetate, methylpropionate, ethylpropionate, propylpropionate, decanolide, mevalonolactone, and caprolactone. The ether-based solvent may include dibutyl ether, tetraglyme, diglyme, dimethoxyethane, 2-methyltetrahydrofuran, and tetrahydrofuran. In addition, the ketone-based solvent may include cyclohexanone. The alcohol-based solvent may include ethanol, and isopropyl alcohol and the aprotic solvent may include nitriles such as R-CN (wherein R is a hydrocarbon group having a C2 to C20 linear, branched, or cyclic structure and may include a double bond, an aromatic ring, or an ether bond), amides such as dimethyl formamide, dioxolanes such as 1,3-dioxolane, and sulfolanes.

The non-aqueous organic solvent may be used at alone or in a mixture, and when the non-aqueous organic solvent is used in a mixture, the mixture ratio may be controlled in accordance with a desirable battery performance.

The carbonate-based solvent is prepared by mixing a cyclic carbonate and a linear carbonate. When the cyclic carbonate and linear carbonate are mixed together in a volume ratio of about 5:5 to about 1:9, an electrolyte performance may be improved.

In particular, in an embodiment, the non-aqueous organic solvent may include the cyclic carbonate and the linear carbonate in a volume ratio of about 5:5 to about 2:8, and as a specific example, the cyclic carbonate and the linear carbonate may be included in a volume ratio of about 4:6 to about 2:8.

As a more specific example, the cyclic carbonate and the linear carbonate may be included in a volume ratio of about 3:7 to about 2:8.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound of Chemical Formula 2.

[Chemical Formula 2]

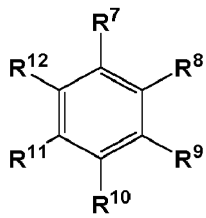

In Chemical Formula 2, $R^7$ to $R^{12}$ are the same or different and are selected from hydrogen, a halogen, a C1 to C10 alkyl group, a C1 to C10 haloalkyl group, and a combination thereof.

Specific examples of the aromatic hydrocarbon-based organic solvent are selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt include at least one supporting salt selected from $LiPF_6$, $LiBF_4$, lithium difluoro(oxalato)borate (LiDFOB), $LiPO_2F_2$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide, LiFSI), $LiC_4F_9SO_3$, $LiClO_4$, $LiAlO_2$, $LiAlCl_4$, $LiN(C_xF_{2x+1}SO_2)(C_yF_{2y+1}SO_2)$, (wherein, x and y are natural numbers, for example, an integer ranging from 1 to 20), LiCl, LiI, and $LiB(C_2O_4)_2$ (lithium bis(oxalato) borate, LiBOB). The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The positive electrode includes a positive electrode current collector and a positive active material layer on the positive electrode current collector, and the positive active material layer includes a positive active material.
The positive active material may include lithiated intercalation compounds that reversibly intercalate and deintercalate lithium ions.

Specifically, a composite oxide of a nickel-containing metal and lithium may be used.

Examples of the positive active material may include a compound represented by any one of the following chemical formulas.

$Li_aA_{1-b}X_bD_2$ ($0.90 \le a \le 1.8$, $0 \le b \le 0.5$); $Li_aA_{1-b}X_bO_{2-c}D_c$ ($0.90 \le a \le 1.8$, $0 \le b \le 0.5$, $0 \le c \le 0.05$); $Li_aE_{1-b}X_bO_{2-c}D_c$ ($0.90 \le a \le 1.8$, $0 \le b \le 0.5$, $0 \le c \le 0.05$); $Li_aE_{2-b}X_bO_{4-c}D_c$ ($0.90 \le a \le 1.8$, $0 \le b \le 0.5$, $0 \le c \le 0.05$); $Li_aNi_{1-b-c}Co_bX_cD_\alpha$ ($0.90 \le a \le 1.8$, $0 \le b \le 0.5$, $0 \le c \le 0.5$, $0 < \alpha \le 2$); $Li_aNi_{1-b-c}Co_bX_cO_{2-\alpha}T_\alpha$ ($0.90 \le a \le 1.8$, $0 \le b \le 0.5$, $0 \le c \le 0.05$, $0 < \alpha < 2$); $Li_aNi_{1-b-c}Co_bX_cO_{2-\alpha}T_2$ ($0.90 \le a \le 1.8$, $0 \le b \le 0.5$, $0 \le c \le 0.05$, $0 < \alpha < 2$); $Li_aNi_{1-b-c}Mn_bX_cD_\alpha$ ($0.90 \le a \le 1.8$, $0 \le b \le 0.5$, $0 \le c \le 0.05$, $0 < \alpha \le 2$); $Li_aNi_{1-b-c}Mn_bX_cO_{2-\alpha}T_\alpha$ ($0.90 \le a \le 1.8$, $0 \le b \le 0.5$, $0 \le c \le 0.05$, $0 < \alpha < 2$); $Li_aNi_{1-b-c}Mn_bX_cO_{2-\alpha}T_2$ ($0.90 \le a \le 1.8$, $0 \le b \le 0.5$, $0 \le c \le 0.05$, $0 < \alpha < 2$); $Li_aNi_bE_cG_dO_2$ ($0.90 \le a \le 1.8$, $0 \le b \le 0.9$, $0 \le c \le 0.5$, $0.001 \le d \le 0.1$); $Li_aNi_bCo_cMn_dG_eO_2$ ($0.90 \le a \le 1.8$, $0 \le b \le 0.9$, $0 \le c \le 0.5$, $0 \le d \le 0.5$, $0.001 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $QO_2$; $QS_2$; $LiQS_2$; $V_2O_5$; $LiV_2O_5$; $LiZO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); $Li_aFePO_4$ ($0.90 \le a \le 1.8$)

In the above chemical formulas, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating process may include any conventional processes as long as it does not cause any side effects on the properties of the positive active material (e.g., spray coating, dipping), which is well known to persons having ordinary skill in this art, so a detailed description thereof is omitted.

The positive active material may be, for example, at least one of lithium composite oxides represented by Chemical Formula 3.

[Chemical Formula 3] $Li_xM^1_yM^2_zM^3_{1-y-z}O_{2-a}X_a$

In Chemical Formula 3,
$0.5 \le x \le 1.8$, $0 \le a \le 0.05$, $0 \le y \le 1$, $0 \le z \le 1$, $0 \le y+z \le 1$, $M^1$, $M^2$, and $M^3$ are each (independently) at least one element selected from Ni, Co, Mn, Al, B, Ba, Ca, Ce, Cr, Fe, Mo, Nb, Si, Sr, Mg, Ti, V, W, Zr, and La, and X is at least one element selected from F, S, P, and Cl.

In an embodiment, the positive active material may be at least one selected from $LiCoO_2$, $LiNiO_2$, $LiMnO_2$, $LiMn_2O_4$, $LiNi_aMn_bCO_cO_2$ (a+b+c=1), $LiNi_aMn_bCo_cAl_dO_2$ (a+b+c+d=1), and $LiNi_eCo_fAl_gO_2$ (e+f+g=1).

In Chemical Formula 3, $0.8 \le y \le 1$, $0 \le z \le 0.2$, and $M^1$ may be Ni.

For example, in the case of $LiNi_aMn_bCo_cO_2$ (a+b+c = 1) and $LiNi_aMn_bCo_cAl_dO_2$ (a+b+c+d = 1), the nickel content may be greater than or equal to about 60% ($a \ge 0.6$), and more specifically, greater than or equal to about 80% ($a \ge 0.8$).

For example, in the case of $LiNi_eCoAl_gO_2$ (e+f+g = 1), the nickel content may be greater than or equal to about 60% ($e \ge 0.6$), and more specifically, greater than or equal to about 80% ($e \ge 0.8$).

In a more specific embodiment, the positive active material may be a lithium composite oxide represented by

any one of Chemical Formula 3-1 to Chemical Formula 3-3.

[Chemical Formula 3-1] $Li_{x1}Ni_{y1}Co_{z1}Al_{1-y1-z1}O_2$

In Chemical Formula 3-1, $1 \leq x1 \leq 1.2$, $0<y1<1$, and $0<z1<1$.

[Chemical Formula 3-2] $Li_{x2}Ni_{y2}CO_{z2}Mn_{1-y2-z2}O_2$

In Chemical Formula 3-2, $1 \leq x2 \leq 1.2$, $0<y2<1$, and $0<z2<1$.

[Chemical Formula 3-3] $Li_{x3}CoO_2$

In Chemical Formula 3-3, $0.5<x3 \leq 1$.

For example, in Chemical Formula 3-1, $1 \leq x1 \leq 1.2$, $0.5 \leq y1<1$, and $0<z1 \leq 0.5$.

As a specific example, in Chemical Formula 3-1, $1 \leq x1 \leq 1.2$, $0.6 \leq y1<1$, and $0<z1 \leq 0.5$.

As a more specific example, in Chemical Formula 3-1, $1 \leq x1 \leq 1.2$, $0.7 \leq y1<1$, and $0<z1 \leq 0.5$.

For example, in Chemical Formula 3-1, $1 \leq x1 \leq 1.2$, $0.8 \leq y1<1$, and $0<z1 \leq 0.5$.

For example, in Chemical Formula 3-2, $1 \leq x2 \leq 1.2$, $0.3 \leq y2<1$, and $0.3 \leq z2<1$.

As a specific example, in Chemical Formula 3-2, $1 \leq x2 \leq 1.2$, $0.6 \leq y2<1$, and $0.3 \leq z2<1$.

As a more specific example, in Chemical Formula 3-2, $1 \leq x2 \leq 1.2$, $0.7 \leq y2<1$, and $0.3 \leq z2<1$.

For example, in Chemical Formula 3-2, $1 \leq x2 \leq 1.2$, $0.8 \leq y2<1$, and $0.3 \leq z2<1$.

A content of the positive active material may be about 90 wt% to about 98 wt% based on the total weight of the positive active material layer.

In an embodiment of the present invention, the positive active material layer may include a binder. A content of the binder may be about 1 wt% to about 5 wt% based on the total weight of the positive active material layer.

The binder improves binding properties of positive active material particles with one another and with a current collector. Examples thereof are polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, and nylon.

Al may be used as the positive electrode current collector.

The negative active material includes a Si composite.

The Si composite may include a core including Si-based particles and an amorphous carbon coating layer. For example, the core may include Si-based particles and an amorphous carbon. The Si-based particles may be formed of at least one of pure Si particles, Si-C composite, Si, $SiO_x$ ($0 < x \leq 2$), and a Si alloy.

For example, the Si-C composite may include a pure Si particles and a crystalline carbon.

An average particle diameter of the Si-based particles may be 10 nm to 200 nm.

In the present specification, the average particle diameter may be a particle size (D50) at 50% by volume in a cumulative size-distribution curve. In other words, a mean particle size result of polydisperse samples is determined by peak analysis of the particle size distribution graph. The median D50 is the value separating the higher half of the data from the lower half. It is the determined particle size from which half of the particles are smaller and half are larger.

The average particle diameter (D50) of the particles may be measured by laser diffraction (LD). The method may be performed according to ISO 13320-1. According to the IUPAC definition, the equivalent diameter of a non-spherical particle is equal to a diameter of a spherical particle that exhibits identical properties to that of the investigated non-spherical particle.

When the average particle diameter of the Si-based particle is within the above range, volume expansion occurring during charging and discharging may be suppressed, and a break in a conductive path due to particle crushing during charging and discharging may be prevented.

In the Si-C composite, Si particles may be included in an amount of about 1 wt% to about 60 wt%, for example, about 3 wt% to about 60 wt%, based on the total weight of the negative active material.

The center portion may not include amorphous carbon, and the amorphous carbon may be present only in the surface portion of the negative active material.

In this case, the surface portion means a region from the outermost surface of the center portion to the outermost surface of the negative active material.

A void may be included in the center portion of the core, and the radius of the center portion may correspond to 30% to 50% of the radius of the negative active material.

In addition, the Si particles are substantially uniformly included in the negative active material as a whole, that is, may be present in a substantially uniform concentration in the center portion and the surface portion.

The amorphous carbon may be soft carbon, hard carbon, a mesophase pitch carbonized product, calcined coke, or a combination thereof.

The crystalline carbon may be graphite, and more specifically may include natural graphite, artificial graphite, or a mixture thereof.

The negative active material may further include graphite.

When the negative active material includes the Si-C composite and the graphite together, the Si-C composite and the graphite may be included in the form of a mixture, in which the Si-C composite and the graphite may be included in a weight ratio of about 1:99 to about 50 :50. More specifically, the Si-C composite and the graphite may be included in a weight ratio of about 3: 97 to about 20: 80 or about 5: 95 to about 20: 80.

The graphite may be, for example, may include natural graphite, artificial graphite, or a mixture thereof.

An average particle diameter of the graphite may be about 5 $\mu$m to about 30 $\mu$m.

The amorphous carbon precursor for forming the amorphous carbon component of the Si-C composite by a pyrolytic process may include a coal-based pitch, mesophase pitch, petroleum-based pitch, coal-based oil, petroleum-based heavy oil, or a polymer resin such as a phenol resin, a furan resin, or a polyimide resin.

In the negative active material layer, the negative active material may be included in an amount of about 95 wt% to about 99 wt% based on the total weight of the negative active material layer.

In an embodiment of the present disclosure, the negative active material layer includes a binder, and optionally a conductive material. In the negative active material layer, a content of the binder may be about 1 wt% to about 5 wt% based on the total weight of the negative active material layer. When the negative active material layer includes a conductive material, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder includes a non-water-soluble binder, a water-soluble binder, or a combination thereof.

The non-water-soluble binder may be selected from polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropylenecopolymer, polyethyleneoxide, polyvinylpyrrolidone, polyepichlorohydrine, polyphosphazene, polyacrylonitrile, polystyrene, an ethylenepropylenediene copolymer, polyvinylpyridine, chlorosulfonated polyethylene, latex, a polyester resin, an acrylic resin, a phenolic resin, an epoxy resin, polyvinyl alcohol, and a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, and alkali metal salts thereof. The alkali metals may be Na, K, or Li. Such a thickener may be included in an amount of about 0.1 parts by weight to about 3 parts by weight based on 100 parts by weight of the negative active material.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, and a carbon fiber; a metal-based material of a metal powder or a metal fiber including copper, nickel, aluminum, and silver; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

A separator may be present between the positive electrode and the negative electrode depending on the type of the rechargeable lithium battery. Such a separator may include polyethylene, polypropylene, polyvinylidene fluoride, or multi-layers thereof such as a polyethylene/polypropylene double-layered separator, a polyethylene/polypropylene/polyethylene triple-layered separator, and a polypropylene/polyethylene/polypropylene triple-layered separator.

Hereinafter, examples of the present invention and comparative examples are described. These examples, however, are not in any sense to be interpreted as limiting the scope of the invention.

## Manufacture of Rechargeable Lithium Battery Cell

### Example 1

$LiNi_{0.88}Co_{0.105}Al_{0.015}O_2$ as a positive active material, polyvinylidene fluoride as a binder, and carbon nanotubes (average length: 50 μm) as a conductive material were mixed in a weight ratio of 96:3:1, respectively, and were dispersed in N-methyl pyrrolidone to prepare a positive active material slurry.

The positive active material slurry was coated on a 20 μm-thick Al foil, dried at 100 °C, and then pressed to prepare a positive electrode.

As a negative active material, a mixture of artificial graphite and a Si-C composite in a weight ratio of 93:7 was used, and the negative active material, a styrene-butadiene rubber binder, and carboxymethyl cellulose were mixed in a weight ratio of 98:1:1, respectively, and dispersed in distilled water to prepare a negative active material slurry.

The Si-C composite included a core including artificial graphite and silicon particles, and a coal-based pitch is coated on the surface of the core. In this case, the silicon content was used in an amount of about 1.0 wt% based on the total weight of the negative active material.

The negative active material slurry was coated on a 10 μm-thick Cu foil, dried at 100 °C, and then pressed to prepare a negative electrode.

An electrode assembly was prepared by assembling the prepared positive and negative electrodes and a polyethylene separator having a thickness of 25 μm, and an electrolyte solution was injected to prepare a rechargeable lithium battery cell.

A composition of an electrolyte solution is as follows.

(Composition of Electrolyte Solution)

Lithium Salt: 1.5 M $LiPF_6$
Non-aqueous Organic Solvent: ethylene carbonate: ethylmethyl carbonate: dimethyl carbonate (EC:EMC:DMC = 20:10:70 in a volume ratio)
Additive: 0.1 parts by weight of 2-fluoro-4-methyl-1 ,3,2-dioxaphospholane, 10 parts by weight of fluoroethylene carbonate (FEC), and 0.5 parts by weight of succinonitrile (SN)

Herein, in the composition of electrolyte solution, "parts by weight" means the relative content of additives to 100 parts by weight of the total electrolyte solution excluding additives (the lithium salt + the non-aqueous organic solvent)

### Comparative Example 1

A rechargeable lithium battery cell was manufactured substantially in the same manner as in Example 1, except that an electrolyte solution including no 2-fluoro-4-methyl-1,3,2-dioxaphospholane and a negative electrode including no silicon particles were used.

### Comparative Example 2

A rechargeable lithium battery cell was manufactured substantially in the same manner as in Example 1, except that an electrolyte solution including no 2-fluoro-4-methyl-1,3,2-dioxaphospholane was used.

### Comparative Examples 3 to 5

Rechargeable lithium battery cells were manufactured substantially in the same manner as in Comparative Example 2, except that the content of silicon was changed respectively into about 5.0 wt%, 10 wt%, and 15 wt% based on the total weight of the negative active material to manufacture a negative electrode.

### Examples 2 and 3

A rechargeable lithium battery cell was manufactured substantially in the same manner as in Example 1, except that the content of silicon was changed respectively into about 5.0 wt% and about 10 wt% based on the total weight of the negative active material to manufacture a negative electrode.

## Comparative Example 6

Rechargeable lithium battery cells were manufactured substantially in the same manner as in Example 1, except that a negative electrode including no silicon was used.

## Example 4

A rechargeable lithium battery cell was manufactured in the same manner as in Example 1, except that the content of the 2-fluoro-4-methyl-1,3,2-dioxaphospholane was changed into 3 parts by weight.

## Examples 5 and 6

Rechargeable lithium battery cells were manufactured substantially in the same manner as in Example 4, except that the content of silicon was changed respectively changed into about 5.0 wt% and 10 wt% based on the total weight of the negative active material.

## Comparative Example 7

A rechargeable lithium battery cell was manufactured substantially in the same manner as in Example 4, except that a negative electrode including no silicon was used.

## Example 7

A rechargeable lithium battery cell was manufactured substantially in the same manner as in Example 1, except that the content of the 2-fluoro-4-methyl-1,3,2-dioxaphospholane was changed into 5 parts by weight.

## Example 8 and 9

Rechargeable lithium battery cells were manufactured substantially in the same manner as Example 7, except that the content of silicon was changed respectively into about 5.0 wt% and 10 wt% based on the total weight of the negative active material.

## Comparative Example 8

A rechargeable lithium battery cell was manufactured substantially in the same manner as in Example 7, except that a negative electrode including no silicon was used.

With respect to each composition of the rechargeable lithium battery cells, the compositions and evaluation results for each additive (2-fluoro-4-methyl-1,3,2-dioxaphospholane) content according to the presence and absence of silicon are shown in Table 1, the compositions and evaluation results for each silicon content according to the presence and absence of the additive (2-fluoro-4-methyl-1,3,2-dioxaphospholane) are shown in Table 2, and relative values for comparing a degree of improvement are shown in Tables 3 and 4.

### Evaluation 1: Evaluation of Room-temperature Charge and Discharge Cycle Characteristics

The rechargeable lithium battery cells according to Examples 1 to 9 and Comparative Examples 1 to 8 were evaluated with respect to cycle characteristics after charges and discharges, and the results are shown in Tables 1 to 3.

While the charges and discharges were 300 cycles repeated at a C-rate of 0.5 C in a range of 2.5 V to 4.2 V at 25 °C, a capacity retention rate and a DC internal resistance (DC-IR) change of the cells were calculated according to Equations 1 and 2, and the results are shown in Tables 1 to 3.

[Equation 1]

$$\text{Capacity retention rate} = (\text{capacity after 300 cycles} / \text{capacity after 1 cycle}) * 100$$

[Equation 2]

$$\text{DCIR change rate} = \{(\text{DC-IR after 300 cycles} - \text{DC-IR after 1 cycle})/(\text{DC-IR after 1 cycle})\} * 100$$

**Evaluation 2: Evaluation of Initial Resistance and Resistance Increase Rate after High-temperature Storage**

The rechargeable lithium battery cells according to Examples 1 to 9 and Comparative Examples 1 to 8 were measured with respect to initial DC resistance (DCIR) as $\triangle V/\triangle I$ (change in voltage/change in current), and after setting a maximum energy inside the battery cells to a fully-charged state (SOC 100%) and storing them at a high temperature of 60 °C for 60 days, DC resistance of the cells was measured and used to calculate a DCIR increase rate (%) according to Equation 3, and the results are shown in Table 1.

[Equation 3]

$$\text{DCIR increase rate} = (\text{DCIR after 60 days} / \text{initial DCIR}) \text{ X } 100\%$$

(Table 1)

| | Additive (2-fluoro-4-methyl-1,3,2-dioxaphospholane) content (wt%) | content of pure Si particle (wt%) | Initial resistance (mΩ) | DCIR change rate (%) | DCIR increase rate at 60 °C (%) |
|---|---|---|---|---|---|
| Comparative Example 1 | 0 | 0 | 13.2 | 8.0 | 138.9 |
| Comparative Example 2 | | 1 | 13.9 | 9.2 | 141.1 |
| Comparative Example 3 | | 5 | 16.4 | 13.7 | 159.7 |
| Comparative Example 4 | | 10 | 20.3 | 22.1 | 190.0 |
| Comparative Example 5 | | 15 | 26.7 | 31.9 | 223.6 |
| Comparative Example 6 | 0.1 | 0 | 12.5 | 7.5 | 134.7 |
| Example 1 | | 1 | 13.1 | 8.7 | 132.6 |
| Example 2 | | 5 | 15.9 | 13.2 | 150.1 |
| Example 3 | | 10 | 19.5 | 21.4 | 176.7 |
| Comparative Example 7 | 3 | 0 | 10.7 | 6.3 | 111.1 |
| Example 4 | | 1 | 11.5 | 7.6 | 114.3 |
| Example 5 | | 5 | 13.9 | 11.1 | 126.2 |
| Example 6 | | 10 | 16.6 | 18.3 | 157.7 |
| Comparative Example 8 | 5 | 0 | 12.3 | 7.4 | 126.4 |
| Example 7 | | 1 | 13.1 | 8.4 | 129.8 |

(continued)

| | Additive (2-fluoro-4-methyl-1,3,2-dioxaphospholane) content (wt%) | content of pure Si particle (wt%) | Initial resistance (mΩ) | DCIR change rate (%) | DCIR increase rate at 60 °C (%) |
|---|---|---|---|---|---|
| Example 8 | | 5 | 14.9 | 12.2 | 140.5 |
| Example 9 | | 10 | 18.3 | 19.4 | 169.1 |

Referring to Table 1, compared with a group having an additive (2-fluoro-4-methyl-1,3,2-dioxaphospholane) content of 0 (Comparative Examples 1 to 5), a group having an additive content (2-fluoro-4-methyl-1,3,2-dioxaphospholane) of 0.1 wt% (Comparative Example 6, Examples 1 to 3), a group having an additive (2-fluoro-4-methyl-1,3,2-dioxaphospholane) content of 3 wt% (Comparative Example 7, Examples 4 to 6), and a group having an additive (2-fluoro-4-methyl-1,3,2-dioxaphospholane) content of 5 wt% (Comparative Example 8 and Examples 7 to 9) exhibited improved resistance characteristics (an initial resistance, a DCIR change rate, a DCIR increase rate).

In other words, when the additive (2-fluoro-4-methyl-1,3,2-dioxaphospholane) content was increased under the same content of Si particle, the initial resistance, DCIR change rate, and DCIR increase rate decreased.

(Table 2)

| | content of pure Si particle (wt%) | Additive (2-fluoro-4-methyl-1,3,2-dioxaphospholan e) content (wt%) | capacity retention rate at room-temperature (%) |
|---|---|---|---|
| Comparative Example 2 | 1 | 0 | 70.7 |
| Example 1 | | 0.1 | 75.6 |
| Example 4 | | 3 | 82.7 |
| Example 7 | | 5 | 77.8 |
| Comparative Example 3 | 5 | 0 | 62.3 |
| Example 2 | | 0.1 | 64.8 |
| Example 5 | | 3 | 74.8 |
| Example 8 | | 5 | 67.9 |
| Comparative Example 4 | 10 | 0 | 54.9 |
| Example 3 | | 0.1 | 58.2 |
| Example 6 | | 3 | 63.7 |
| Example 9 | | 5 | 57.9 |
| Comparative Example 5 | 15 | 0 | 50.4 |

(Table 3)

| content of pure Si particle (wt%) | Comparison by additive (2-fluoro-4-methyl-1,3,2-dioxaphospholane) content | capacity retention ratio at room-temperature (%) |
|---|---|---|
| 1 | Comparative Example 2 | 100 |
| | Example 1 | 107.0 |
| | Example 4 | 117.0 |
| | Example 7 | 110.0 |

(continued)

| content of pure Si particle (wt%) | Comparison by additive (2-fluoro-4-methyl-1,3,2-dioxaphospholane) content | capacity retention ratio at room-temperature (%) |
|---|---|---|
| 5 | Comparative Example 3 | 100 |
| | Example 2 | 104.0 |
| | Example 5 | 120.0 |
| | Example 8 | 109.0 |
| 10 | Comparative Example 4 | 100 |
| | Example 3 | 106.0 |
| | Example 6 | 116.0 |
| | Example 9 | 105.5 |

Table 3 shows relative values for comparing a relative degree in improvement of capacity retention at room temperature of the compositions including the additive (2-fluoro-4-methyl-1,3,2-dioxaphospholane) with that of the compositions including no 2-fluoro-4-methyl-1,3,2-dioxaphospholane.

Referring to Tables 2 and 3, when the Si-C composite was included with the additive (2-fluoro-4-methyl-1,3,2-dioxaphospholane) according to the present invention, compared with when the 2-fluoro-4-methyl-1,3,2-dioxaphospholane was not added, capacity retention increased, as the content of the additive (2-fluoro-4-methyl-1,3,2-dioxaphospholane) increased.

Referring to Tables 1 to 3, as the Si-C composite was included, the cells equally maintained high capacity retention, and simultaneously, when the additive represented by Chemical Formula 1 according to the present invention was included with Si-C composite, compared with when the additive represented by Chemical Formula 1 was not included, an increase in resistance (an initial resistance increase rate, a DCIR change rate, and a DCIR increase rate at a high-temperature storage) according to an increase in the content of Si particles decreased, but capacity retention increased, and accordingly, trade-off characteristics caused by a side reaction due to the use of the Si-C composite were complementarily improved.

As a result, when an electrolyte solution including the additive represented by Chemical Formula 1 was used with a negative electrode including Si-C composite, resistance characteristics and cycle-life characteristics were simultaneously improved.

Accordingly, the rechargeable lithium battery cell according to an example embodiment of the present invention realized excellent cycle characteristics due to improved electrolyte solution impregnation properties and in addition, improved high-temperature stability due to reduced resistance after the high-temperature storage.

## Claims

**1.** A rechargeable lithium battery (100), comprising

a positive electrode (114) including a positive active material;
a negative electrode (112) including a negative active material; and
an electrolyte solution including a non-aqueous organic solvent, a lithium salt, and an additive,
wherein the negative active material includes a Si composite, and
the additive includes a compound represented by Chemical Formula 1:

[Chemical Formula 1]

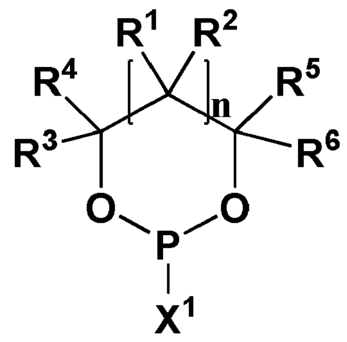

wherein, in Chemical Formula 1,
$X^1$ is a fluoro group, a chloro group, a bromo group, or an iodo group,
$R^1$ to $R^6$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1.

**2.** The rechargeable lithium battery of claim 1, wherein
Chemical Formula 1 is represented by Chemical Formula 1A or Chemical Formula 1B:

[Chemical Formula 1A] [Chemical Formula 1B]

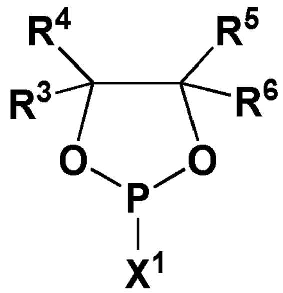
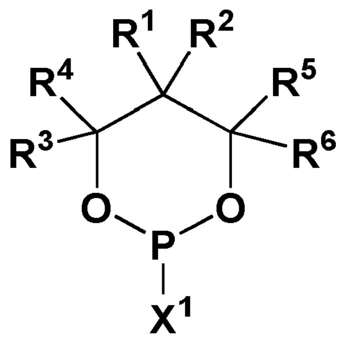

wherein, in Chemical Formula 1A and Chemical Formula 1B,

$X^1$ is a fluoro group, a chloro group, a bromo group, or an iodo group, and
$R^1$ to $R^6$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

**3.** The rechargeable lithium battery of claim 2, wherein

in Chemical Formula 1A and Chemical Formula 1B, $R^3$ and $R^4$ are each hydrogen, and
at least one of $R^1$, $R^2$, $R^5$, and $R^6$ is a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

**4.** The rechargeable lithium battery of any one of the preceding claims, wherein
the compound represented by Chemical Formula 1 is included in an amount of 0.1 parts by weight to 10 parts by

weight based on 100 parts by weight of the non-aqueous organic solvent and the lithium salt of the electrolyte solution.

**5.** The rechargeable lithium battery of claim 1 or 4, wherein the compound represented by Chemical Formula 1 is at least one selected from the compounds of Group 1:

[Group 1]

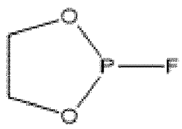 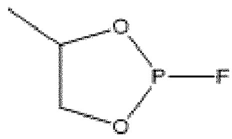 .

**6.** The rechargeable lithium battery of any one of the preceding claims, wherein the electrolyte further includes at least one of other additives of vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propene sultone (PST), propane sultone (PS), lithium tetrafluoroborate ($LiBF_4$), lithium difluorophosphate ($LiPO_2F_2$), and 2-fluoro biphenyl (2-FBP).

**7.** The rechargeable lithium battery of any one of the preceding claims, wherein the Si composite includes a core including Si-based particles and an amorphous carbon coating layer.

**8.** The rechargeable lithium battery of claim 7, wherein the core includes the Si-based particles and an amorphous carbon, and Si-based particles are formed of at least one of pure Si particles, Si-C composite, Si, $SiO_x$ ($0 < x \leq 2$), and a Si alloy.

**9.** The rechargeable lithium battery of claim 8, wherein the Si-C composite includes a pure Si particles and a crystalline carbon.

**10.** The rechargeable lithium battery of any one of claims 7 to 9, wherein

a void is included in a center portion of the core, and
a radius of the center portion corresponds to 30% to 50% of the radius of the negative active material.

**11.** The rechargeable lithium battery of any one of claims 7 to 10, wherein an average particle diameter of the Si-based particles is 10 nm to 200 nm.

**12.** The rechargeable lithium battery of any one of claims 7 to 11, wherein the negative active material further includes graphite.

**13.** The rechargeable lithium battery of any one of claims 7 to 12, wherein the amorphous carbon includes soft carbon, hard carbon, a mesophase pitch carbonized product, calcined coke, or a combination thereof.

**14.** The rechargeable lithium battery of any one of the preceding claims, wherein the positive active material includes at least one of lithium composite oxides represented by Chemical Formula 3:

[Chemical Formula 3] $Li_xM^1_yM^2_zM^3_{1-y-z}O_{2-a}X_a$

wherein, in Chemical Formula 3,
$0.5 \leq x \leq 1.8$, $0 \leq a \leq 0.05$, $0 \leq y \leq 1$, $0 \leq z \leq 1$, $0 \leq y+ \leq 1$, $M^1$, $M^2$, and $M^3$ are each independently at least one element selected from Ni, Co, Mn, Al, B, Ba, Ca, Ce, Cr, Fe, Mo, Nb, Si, Sr, Mg, Ti, V, W, Zr, and La, and X is at least one element selected from F, S, P, or Cl.

**15.** The rechargeable lithium battery of claim 14, wherein

in Chemical Formula 3, $0.8 \leq y \leq 1$, $0 \leq z \leq 0.2$, and $M^1$ is Ni.

【FIG. 1】

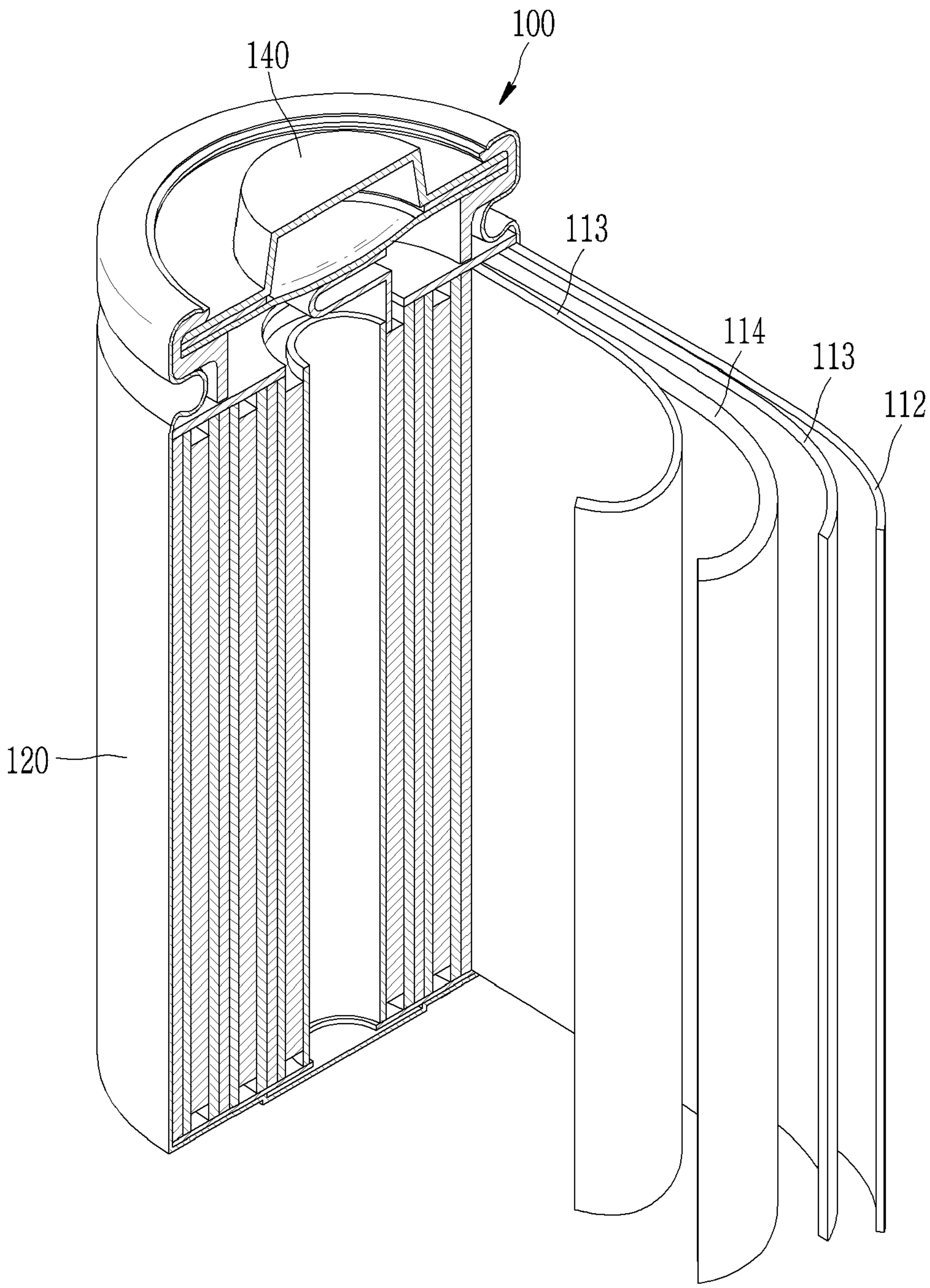

Europäisches Patentamt
European Patent Office
Office européen des brevets

# EUROPEAN SEARCH REPORT

Application Number
EP 22 19 1033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P<br>A,P | WO 2022/158701 A1 (SAMSUNG SDI CO., LTD.) 28 July 2022 (2022-07-28)<br>* abstract *<br>* paragraph [0010] - paragraph [0012] *<br>* paragraph [0034] - paragraph [0055]; compounds 2-c, 2-d *<br>* paragraph [0203] - paragraph [0214] *<br>* example 11; table 1 *<br>* claims 1, 8, 9, 11, 13 *<br>----- | 1-9, 11-15<br>10 | INV.<br>H01M10/0567<br>H01M10/0525<br>H01M4/36<br>H01M4/38<br>H01M4/587<br>H01M4/62<br><br>ADD.<br>H01M4/525 |
| X,P<br>A,P | WO 2022/158728 A1 (SAMSUNG SDI CO., LTD.) 28 July 2022 (2022-07-28)<br>* abstract *<br>* paragraph [0009] - paragraph [0011] *<br>* paragraph [0028] - paragraph [0051]; compounds 2-c, 2-d *<br>* paragraph [0191] - paragraph [0202] *<br>* examples 4-6, 10-12, 16-18, 22-24, 28-30, 34-36, 40-42; table 1 *<br>* comparative examples 6, 10-12, 16-18; table 1 *<br>* claims 1, 9-11, 13, 15 *<br>----- | 1-5,7-9, 11-15<br>6,10 | |
| | | | TECHNICAL FIELDS SEARCHED (IPC) |
| X<br>Y | KR 2019 0123136 A (SAMSUNG SDI CO., LTD.) 31 October 2019 (2019-10-31)<br>* abstract *<br>* paragraph [0009] - paragraph [0015] *<br>* paragraph [0025] - paragraph [0038] *<br>* paragraph [0078] - paragraph [0089] *<br>* paragraph [0130] - paragraph [0132] *<br>* paragraph [0141] - paragraph [0144] *<br>* comparative example 1; examples 1-5 *<br>* claims 1, 2, 4-7, 9, 11 *<br>-----<br>-/-- | 1-6,14<br>7-13,15 | H01M |

The present search report has been drawn up for all claims

| Place of search | Date of completion of the search | Examiner |
|---|---|---|
| Munich | 17 January 2023 | Masson, Jean-Pierre |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 19 1033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/185773 A1 (SK INNOVATION CO., LTD.) 11 June 2020 (2020-06-11)<br>* paragraph [0016] - paragraph [0048] *<br>* paragraph [0057] - paragraph [0062] *<br>* paragraph [0067] - paragraph [0078] *<br>* paragraph [0085] - paragraph [0087] *<br>* paragraph [0107] *<br>* paragraph [0117] - paragraph [0120] *<br>* paragraph [0124] - paragraph [0132] *<br>* comparative example 4;<br>examples 1-4; table 1 *<br>* example 5; table 3 *<br>* claims 1-7, 10, 12-15 *<br>----- | 1-15 | |
| Y | EP 3 817 121 A1 (SAMSUNG SDI CO., LTD.; POSTECH RESEARCH & BUSINESS DEVELOPMENT FOUND.) 5 May 2021 (2021-05-05)<br>* paragraph [0004] - paragraph [0018] *<br>* paragraph [0049] - paragraph [0051] *<br>* paragraph [0055] - paragraph [0064] *<br>* paragraph [0076] - paragraph [0087] *<br>* examples 1-3 *<br>* claims 1, 7-15 *<br>----- | 1-15 | TECHNICAL FIELDS SEARCHED (IPC) |
| Y | EP 3 291 352 A1 (SAMSUNG ELECTRONICS CO., LTD.; SAMSUNG SDI CO., LTD.)<br>7 March 2018 (2018-03-07)<br>* paragraph [0007] - paragraph [0009] *<br>* paragraph [0021] - paragraph [0023] *<br>* paragraph [0030] *<br>* paragraph [0046] - paragraph [0055] *<br>* paragraph [0081] - paragraph [0084] *<br>* paragraph [0105] *<br>* examples 1-9; table 4 *<br>* examples 10-24; table 5 *<br>* claims 1, 4, 9-14 *<br>----- | 1-15 | |

The present search report has been drawn up for all claims

1

| Place of search | Date of completion of the search | Examiner |
|---|---|---|
| Munich | 17 January 2023 | Masson, Jean-Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 19 1033

This annex lists the patent family members relating to the patent documents cited in the above-mentioned European search report. The members are as contained in the European Patent Office EDP file on
The European Patent Office is in no way liable for these particulars which are merely given for the purpose of information.

17-01-2023

| Patent document cited in search report | Publication date | Patent family member(s) | Publication date |
|---|---|---|---|
| WO 2022158701 A1 | 28-07-2022 | KR 20220106577 A | 29-07-2022 |
| | | WO 2022158701 A1 | 28-07-2022 |
| WO 2022158728 A1 | 28-07-2022 | KR 20220106579 A | 29-07-2022 |
| | | WO 2022158728 A1 | 28-07-2022 |
| KR 20190123136 A | 31-10-2019 | NONE | |
| US 2020185773 A1 | 11-06-2020 | CN 111293361 A | 16-06-2020 |
| | | KR 20200070802 A | 18-06-2020 |
| | | US 2020185773 A1 | 11-06-2020 |
| EP 3817121 A1 | 05-05-2021 | CN 112751080 A | 04-05-2021 |
| | | EP 3817121 A1 | 05-05-2021 |
| | | KR 20210052006 A | 10-05-2021 |
| | | US 2021135287 A1 | 06-05-2021 |
| EP 3291352 A1 | 07-03-2018 | CN 107799817 A | 13-03-2018 |
| | | EP 3291352 A1 | 07-03-2018 |
| | | US 2018065997 A1 | 08-03-2018 |

EPO FORM P0459

For more details about this annex : see Official Journal of the European Patent Office, No. 12/82